Europäisches Patentamt

European Patent Office

Office européen des brevets

(11) Veröffentlichungsnummer: **0 384 035**
**A1**

## EUROPÄISCHE PATENTANMELDUNG

(21) Anmeldenummer: 89123725.7

(51) Int. Cl.⁵: **B23P 21/00**

(22) Anmeldetag: 22.12.89

Die Bezeichnung der Erfindung wurde geändert (Richtlinien für die Prüfung im EPA, A-III, 7.3).

(30) Priorität: 30.12.88 DE 3844270

(43) Veröffentlichungstag der Anmeldung:
29.08.90 Patentblatt 90/35

(84) Benannte Vertragsstaaten:
AT BE CH DE ES FR GB GR IT LI LU NL SE

(71) Anmelder: PROLINE Innovation zur Fabrikautomation GmbH & Co. Kommanditgesellschaft
Emil-Figge-Strasse 76
D-4600 Dortmund 50(DE)

(72) Erfinder: Gandt, Burkhardt

Unterer Ahlenbergweg 19
5804 Herdecke-Ahlenberg(DE)
Erfinder: George, Horst
Gotthelfstrasse 101
4600 Dortmund 50(DE)
Erfinder: Nolte, Friedhelm
Oberstrasse 183 A
4630 Bochum 7(DE)
Erfinder: Seltenheim, Volker
Aplerbecker Strasse 489
46 Dortmund(DE)

(74) Vertreter: Beckensträter, Friedrich Wihelm, Dr.
Falkensteiner Strasse 23
D-6000 Frankfurt am Main 1(DE)

(54) **Flexible Fertigungs- und/oder Montagezelle mit automatischer Umrüstung produktspezifischer Einrichtung.**

(57) Automatisierte Fertigungs- und/oder Montagezellen sind meist für hohe Stückzahlen eingerichtet und auf ein Produkt zugeschnitten, so daß - im Gegensatz zur Flexibilität der dabei verwendeten Roboter - bei Produktumstellungen aufwendige Umrüstungen der Peripherie notwendig sind. Dieser Nachteil soll durch die Erfindung behoben werden.

Es wird daher vorgeschlagen, an die Fertigungs- und/oder Montagezelle verfahrbare Speichereinrichtungen (1) für die jeweils zu produzierenden Produkte bzw. deren Teile und/oder für die jeweils für die Herstellung und/oder Montage benötigen Vorrichtungen anzukoppeln, wobei letztere (2) auch fest angeordnet und von außerhalb der Zelle beschickbar sein können.

Die flexible Fertigungs- und/oder Montagezelle eignet sich für die automatisierte industrielle Herstellung und/oder Montage.

EP 0 384 035 A1

Fig. 1

# Flexible Fertigungs- und/oder Montagezelle mit automatischer Umrüstung produktspezifischer Einrichtungen

Die Erfindung betrifft eine flexible Fertigungs- und/oder Montagezelle für die Herstellung und/oder Montage unterschiedlicher Produkte mit automatischer Umrüstung auf unterschiedliche Produkte und produktspezifische Vorrichtungen.

Automatisierte Fertigungs- und/oder Montagezellen sind meist für hohe Stückzahlen eingerichtet und auf ein Produkt zugeschnitten. Im Falle der flexiblen Automation werden meist Roboter eingesetzt, deren Vorteil darin besteht, am Ende einer Produktlebensdauer für ein Nachfolgeprodukt eingesetzt werden zu können. Im Gegensatz zur Flexibilität der Roboter sind bei Produktumstellung aufwendige Umrüstungen der Peripherie notwendig, und nicht selten muß diese komplett ausgetauscht werden. Gleichzeitig stellen die flexibel automatisierten Arbeitsplätze meist eine Insellösung dar.

Sind automatisierte Fertigungs- und/oder Montagesysteme mit der Herstellung und/oder Montage eines bestimmten Produkts nicht mehr ausgelastet, arbeiten sie unwirtschaftlich. Geht die Herstellungs- und/oder Montagestückzahl eines bestimmten Produkts zurück, könnte ein solches System aber ausgelastet werden, wenn mit ihm zusätzlich ein oder mehr andere Produkte hergestellt und/oder montiert werden. Daraus ergibt sich die Forderung nach einer Produktionsstrategie wie just-in-time, d.h. mit schnellerer Reaktion auf Bestellvorgänge und zugleich wirtschaftlicher Fertigung auch von Kleinstserien. Der heute vorhandene Automatisierungsgrad erfordert darüber hinaus ein Ein- bzw. Anbindung an vorhandene logistische Strukturen. Ziel der Erfindung ist deshalb ein Fertigungs-und/oder Montagesystem, das die automatische Umrüstung der Fertigungs- und/oder Montagevorrichtungen ermöglicht, die Werkstücke zuführt, eine sinnvolle Einbindung von Fertigungs- und/oder Montagezellen in die logistischen Abläufe zuläßt und die Verwaltung und Steuerung der Produktion wesentlich vereinfacht. Die Struktur des Systems soll flexibel sein, so daß alle denkbaren Ablaufstrukturen der Fertigung und/oder Montage nachgebildet bzw. durch das neue System sinnvoll ergänzt werden können.

Der Erfindung liegt die Aufgabe zugrunde, eine flexible Fertigungs- und/oder Montagezelle zu entwickeln, die in der Lage ist, eine Produktionsumstellung, iniziiert durch das sich ändernde Produkt, vorzunehmen. Jede bestehende Fertigungs- und/oder Montagestruktur soll mit diesem System nachgebildet bzw. ergänzt werden können. Daneben soll die logistische Einbindung auch von Insellösungen verbessert werden.

Insbesondere sollen in einer Fertigungs- und/oder Montagezelle produktspezifische Vorrichtungen, wie z.B. spezielle Vorrichtungen, Werkzeuge und Greifer zwischengespeichert, im Bedarfsfall angeboten und verwaltet werden. Gleichzeitig sollen die Handhabungsvorrichtungen dazu genutzt werden, die Produkte zu handhaben, d.h. von einem Transferband auf ein anderes zu legen oder sie in speziellen Regalen zwischenzulagern. Dabei besteht die Zelle selbst noch aus einem Grundgestell mit Roboter(n), Aufnahmevorrichtungen für die wechselnden produktspezifischen Vorrichtungen sowie für die Produkte und einigen wenigen nich handhabbaren, schnell auswechselbaren, produktspezifischen Vorrichtungen. Die Verbindung zwischen der eigentlichen Fertigungs- und/oder Montagezelle und der vorgelagerten Dienstzelle, in der ein Handhabungssystem die zu fertigenden und/oder zu montierenden Werkstücke bereitstellt, kann durch Transfersysteme oder durch die Dienstzelle selbst hergestellt werden. Im letztgenannten Falle legt das Handhabungssystem die produktspezifischen Vorrichtungen oder/und die zu fertigenden bzw. montierenden Teile direkt in die dafür vorgesehenen Aufnahmevorrichtungen der Fertigungs- und/oder Montagezelle ein.

Für die Speicherung von Produktpaletten ist eine Reihe von Handhabungsvorrichtungen bekannt, die hauptsächlich zur Palettierung von Teilen dienen und dazu Paletten auf- und abstapeln. Daneben gibt es eine Reihe von Handhabungsgeräten, die dazu dienen, Teile in Produktionsmaschinen einzulegen oder für die Montage zu handhaben. Es ist kein Handhabungsgerät mit entsprechend zugeschnittener Peripherie bekannt, das für die Bereitstellung von Vorrichtungen, insbesondere produktspezifischen Vorrichtungen, und Produkten konzipiert wurde und in Zusammenarbeit mit einem zweiten Handhabungsgerät eine derartig flexible Fertigungszelle darstellt. In das System eingeschleuste Produkte werden identifiziert oder vorgegeben, und die Produktionszelle wird selbständig umgerüstet, die Produkte werden gehandhabt, gefertigt oder montiert, zwischengelagert und ausgeschleust.

Zur Lösung der gestellten Aufgabe wird erfindungsgemäß vorgeschlagen, daß an die Fertigungs- und/oder Montagezelle verfahrbare Speichereinrichtungen ankoppelbar sind, in denen die jeweils zu produzierenden Produkte bzw. deren Teile (Werkstücke) und/oder die jeweils für die Herstellung und/oder Montage benötigen werkstückspezifischen Vor richtungen wie Werkzeuge, Greifer und dergl. bereitgestellt werden. Wegen weiterer Einzelheiten und vorteilhafter Weiterbildungen der Erfindung wird auf die Patentansprüche Bezug genommen.

Mit der erfindungsgemäßen Fertigungs- und/oder Montagezelle wurde eine Vorrichtung mit einer neuen Zellenstruktur geschaffen, die der eigentlichen Fertigungs- bzw. Montageeinrichtung alle jeweils benötigten Vorrichtungen, insbesondere produktspezifische Vorrichtungen, und die jeweiligen Werkstücke bereitstellt und sie für sie verwaltet. Diese Vorrichtung ist ein modular aufgebautes Handhabungssystem, das mit seinem speziellen Zubehör sternförmig aufgebaut ist. Als flexible Fertigungs- und/oder Montagezelle ist sie nicht nur in der Lage, ihre eigenen produktspezifischen Einrichtungen auszutauschen, sondern sie kann darüber hinaus für andere, an ihr angeschlossene, automatisierte Arbeitsplätze, auch in der Anordnung einer Straße, die Umrüstung und die Verwaltung produktspezifischer Einrichtungen übernehmen. Die erfindungsgemäße Vorrichtung ermöglicht insbesondere auch die Verknüpfung von Insellösungen, die automatische Änderung der Roboterperpherie und die automatische Zuführung von Werkzeugen und Werkstücken. Der Begriff der flexiblen Fertigungs- bzw. Montagezelle läßt sich damit als eine Einrichtung realisieren, die sich mit Zuführung eines neuen Produktes selbsttätig umrüstet, d.h. produktspezifisch Werkzeuge und Vorrichtungen austauscht und mit der Fertigung des neuen Produkts beginnt. Die Vorrichtung besteht aus mehreren funktionalen Baugruppen. Der Aufbau beinhaltet mindestens zwei in ihren Aufgabenstellungen unterschiedliche Handhabungseinrichtungen und weitere sternförmig oder rasterförmig angeordnete Baugruppen, denen jeweils kein fester Winkel zu geordnet sein muß.

Ausführungsbeispiele der Erfindung werden nachfolgend anhand der anhängenden Zeichnung näher beschrieben.

Es zeigen:

Fig. 1 in perspektivischer Ansicht die Komponenten einer erfindungsgemäßen Fertigungs- und/oder Montagezelle und deren Anordnung sowie Zuordnung zueinander,

Fig. 2 eine Prinzipskizze einer erfindungsgemäßen Vorrichtung in Draufsicht von oben und

Fig. 3 in perspektivischer Ansicht eine Ausführungsform einer Fertigungs- und/oder Montagezelle mit direkter Beschickung eines Schiebetischs.

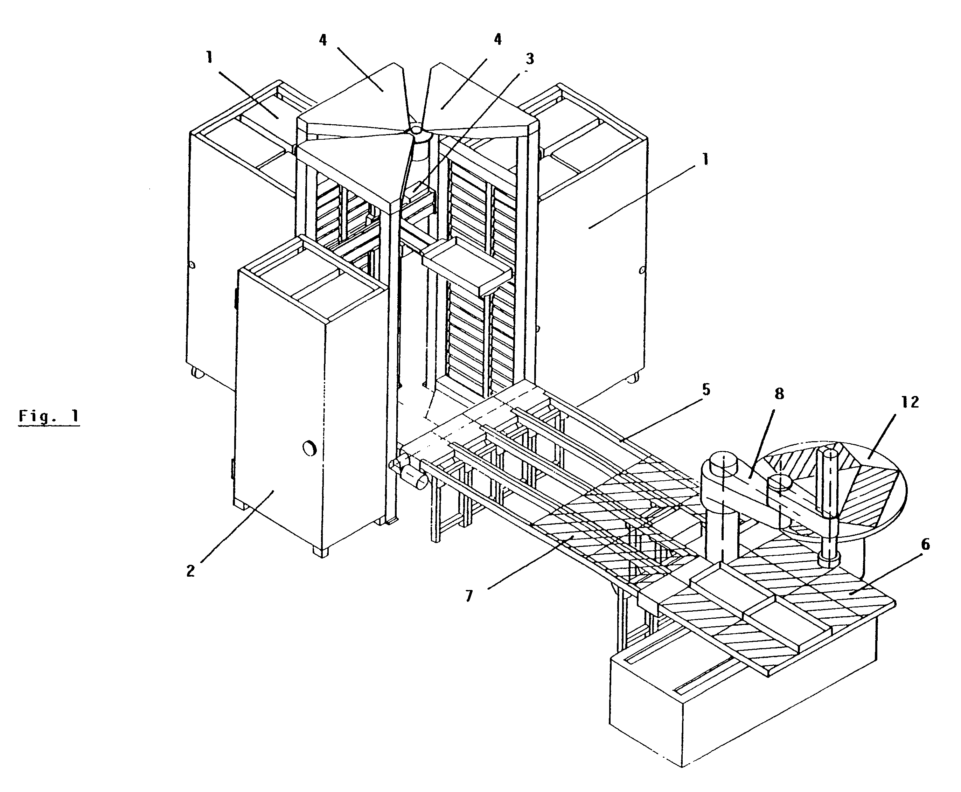

Gemäß Fig. 1 sind verfahrbare 1 und/oder fest zugeordnete 2 Speichereinrichtungen (Magazine) an ein modular aufgebautes Handhabungssystem 3 über Koppelstationen 4 angekoppelt. Die Speichereinrichtungen 1, 2 sind von außerhalb der Fertigungs- und/oder Montagezelle, vorzugsweise manuell, beschickbar. Transportsysteme 5 mit rotatorischen und translatorischen Wirkbewegungen stellen die Verbindung zu dem Arbeitsbereich des eigentlichen Fertigungs- oder Montageroboters 8 her. In diesem Arbeitsbereich werden sowohl die Werkstücke als auch die zugehörigen Vorrichtungen positioniert und so dem Roboter 8 für eine Handhabung zugänglich gemacht. Dies kann während eines Fertigungsprozesses statisch oder dynamisch erfolgen. Statisch heißt, daß während der Produktion eines Werkstücks keine Lageveränderung stattfindet, und dynamisch bedeutet, daß z.B. während der Produktion eines Werkstückes eine Vorrichtung den Arbeitsbereich des Roboters verläßt und erst wieder bei Bedarf in den Arbeitsbereich erneut eingefahren und positioniert wird, Durch die Verwendung und Kombination an sich bekannter Handhabungskomponenten ergeben sich neben der Möglichkeit, bestehende Produktionsabläufe abzubilden und zu rationalisieren, ganz neue Möglichkeiten der Fertigungs- und Montagestrukturen.

In den Speichereinrichtungen 1 können die Werkstücke, aber auch die benötigen werkstückspezifischen Einrichtungen, wie Vorrichtungen, Werkzeuge, Greifer usw. bereitgestellt werden. In einer Speichereinrichtung 2 können die unterschiedlichen werkstückspezifischen Einrichtungen bereitgestellt und abgelegt werden. Den speziellen Baugruppen werden feste Speicherplätze in den Magazinen zugeordnet, oder sie werden mit Hilfe von Identifikationssystemen in ihrer Lage bestimmt.

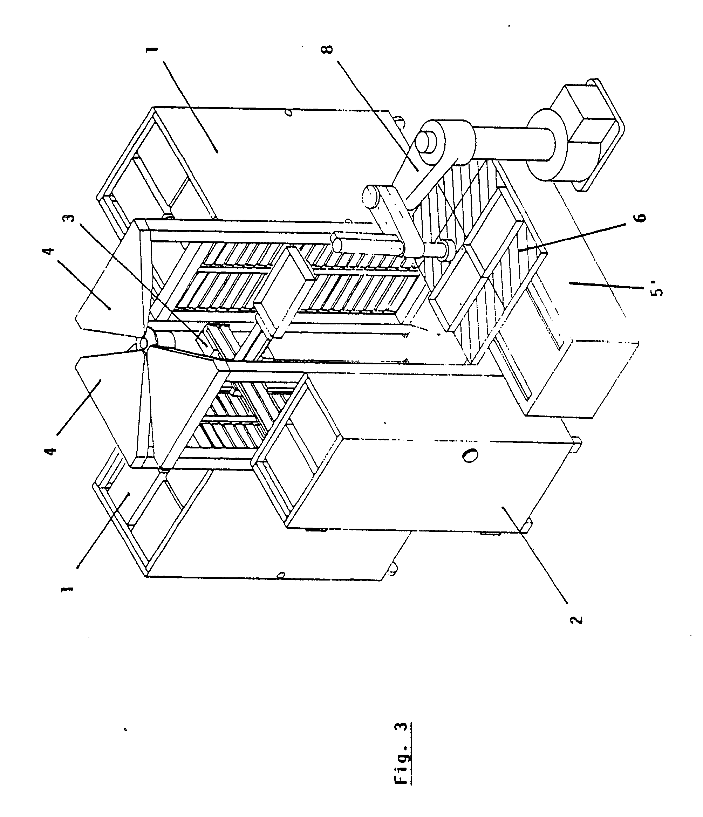

Nach dem in Fig. 1 dargestellten Ausführungsbeispiel der Erfindung werden fahrbare Magazine 1 mittels einer Koppelstation 4 einer Fertigungszelle positioniert zugeordnet. An den Magazinen 1 und/oder in den darin gelagerten Werkstück- oder Baugruppenträgerplatten 6 sind Informationsträger eines Identifikationssystems angebracht. Diese werden nach der Ankoppelung der Magazine 1 gelesen, vom Zellenrechner ausgewertet und in Steuerbefehle umgesetzt. Daraufhin werden werkstückspezifische Einrichtungen, die in speziellen, dafür fest installierten Magazinen 2 gelagert sind und/oder in verfahrbaren Produktmagazinen mitangeliefert werden, von einem Handhabungssystem 3, das auf ein Grundraster von Werkstück- oder Baugruppenträgern abgestimmt ist, aufgenommen und auf ein Transportsystem 5 oder bzw. und weiter auf einen festinstallierten Positioniertisch (Rundschalttisch) 12 abgesetzt. Der Einsatz eines Transportsystems 5 wird dann erforderlich, wenn die Trägerplatten 6 in den Arbeitsbereich eines Montage- oder Fertigungsroboters 8 eingefahren werden müssen, wo sie dann mit Hilfe von Spannsystemen positioniert oder vom Transportsystem 5 abgenommen und positioniert werden. Es ist aber auch vorgesehen, die Trägerplatten 6 an andere Transportsysteme zu übergeben bzw. die Platten in andere Transportsysteme einzuschleusen. Auch dort werden die Platten je nach Bedarf direkt auf dem Transportsystem positioniert oder erst angehoben und dann positioniert. Denkbar ist auch, daß das System für die Handhabung der Trägerplatten 6 diese direkt auf einen möglicherweise verfahrbaren Tisch als Transportsystem absetzt, auf dem die Trägerplatten positioniert einem Roboter 8 angeboten werden. Dies ist in Fig. 3 dargestellt mit einem Schiebetisch 5'. Im übrigen sind in Fig. 3 gleiche Teile mit gleichen Bezugsziffern wie in Fig. 1 bezeichnet.

Werden größere Vorrichtungen benötigt, die nicht in das vorgegebene Raster der Werkstück- und Baugruppen-Trägerplatten 6 passen, kann ein ganzes Vielfaches dieser Trägerplatten verwendet werden. Diese Trägerplatten können dann von Hand, mit speziellen Handhabungsvorrichtungen oder einem weiteren angepaßten freiprogrammierbaren Handhabungssystem der Handhabungszelle oder -straße zugeführt werden.

Der Arbeitsbereich eines Roboters 8 und seine unmittelbare Umgebung lassen sich mit Hilfe der Transportsysteme 5 und der Positionierstationen in gleichmäßige Rasterflächen 7 aufteilen. Eine Rasterfläche 7 bzw. ein entsprechendes ganzes Vielfaches kann von einer Montagevorrichtung, einem Greiferwechselsystem, einer Schwingfördereinrichtung oder einer anderen ähnlichen, zu einer Montagezelle gehörenden Baugruppe belegt werden. Benötigte Energien oder Daten werden über Steckverbindungen, die während oder bei der Positionierung hergestellt werden, auf die Baugruppenträgerplatten 6 übertragen. Eine bzw. zwei Rasterflächen des Roboterarbeitsplatzes bleiben im Regelfall für Produktträgerplatten reserviert. Von ihnen werden z.B. im Falle einer Montageaufgabe Einzelteile entnommen, auf eine für eine Montageplatte vorgesehene Rasterfläche 7 montiert und auf einer Produktträgerplatte, die für Fertigteile vorgesehen ist und der Ausgangsträgerplatte entsprechen kann, abgelegt. Außerhalb der Rasterflächen 7 und innerhalb des Roboterarbeitsbereiches können wie bei herkömmlichen Roboterarbeitszellen konventionelle, produktabhängige Fertigungs- und Montageeinrichtungen, wie z.B. besondere Schwingfördertöpfe, installiert werden, die nur für ein Produkt benötigt werden, aber nicht oder nur mit hohem Aufwand innerhalb des Rasters installiert werden können.

Die Baugruppenträgerplatten 6, auf denen die unterschiedlichsten Fertigungs- und Montageeinrichtungen installiert sind, können auf einem sogenannten Einrichtplatz außerhalb des Roboterarbeitsplatzes montiert, eingerichtet und vermessen werden. Damit ist es möglich, die Produktionsumstellung der Fertigungs- und Montagezelle vorzubereiten, ohne die Produktion der Zelle zu unterbrechen. Eine andere Möglichkeit bietet der Einsatz eines Visionsystems, mit dessen Hilfe z.B. neu zugeführte Baugruppenträgerplatten 6 nach dem Fixieren im Arbeitsbereich vermessen und die Koordinaten berechnet werden.

Nach der Einrichtung des Fertigungs- und Montage-Roboter-Arbeitsplatzes. d.h., daß alle für die Fertigung oder Montage notwendigen Einrichtungen in den dafür vorgesehenen Rasterflächen positioniert sind, werden von dem Handhabungssystem, das die Magazine beschickt, die Werkstückträgerplatten auf die Transportsysteme 5 aufgesetzt und in den Arbeitsbereich des Roboters 8 gefördert oder auf einen möglicherweise verfahrbaren Tisch 5' direkt im Arbeitsbereich des Roboters 8 abgesetzt. Nach der Fertigung und Montage der Werkstücke werden die Werkstückträgerplatten vom Transportsystem 5 wieder aus dem Arbeitsbereich des Roboters ausgeschleust und vom Handhabungssystem für die Trägerplatten in einem Magazin bzw. Magazinplatz für Fertigteile (nicht dargestellt) abgelegt.

Ein übergeordneter Zellenrechner kann mittels des Identsystems die Fertigung überwachen und gleichzeitig auftretende Produktfehler sowie Störungen des Ablaufes statisch auswerten und so gezielte Verbesserungen der Einrichtungen bzw. den notwendigen verschleißbedingten Austausch von Bauteilen anzeigen.

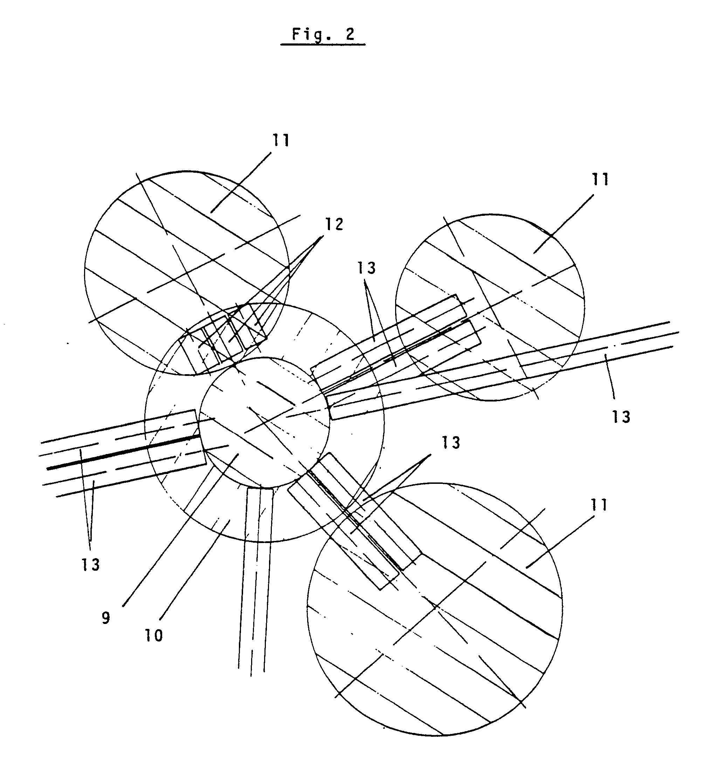

Nach der Prinzipskizze gemäß Fig. 2 weist damit die Fertigungs- und/oder Montagezelle mit den zu Fig. 1 erwähnten Vorrichtungen mindestens zwei koaxiale Arbeitsbereiche 9, 10, 11 auf. Der erste 9, 10 kann als Verfahrbereich bezeichnet werden und ist deckungsgleich mit dem Arbeitsbereich 11 des Handhabungssystems ·für die Werkstück- und Baugruppenträger, und der zweite über stationäre Tische 12 und/oder Transportsysteme 13 angekoppelte Bereich ist der eigentliche Produktionsbereich, der Arbeitsbereich der Fertigungs- und/oder Montageroboter 11. Die angetriebenen Freiheitsgrade sind wahlweise auf Anschlag zu verfahren oder frei programmierbar. Die Handhabungseinrichtung für die Werkstück- und Baugruppenträgerplatten kann eigenständig betrieben werden. Sie weist eine eigene Steuerung mit einer Schnittstelle auf. Damit ist eine Integration in bestehende Anlagen leicht gegeben. Es sind alle am Markt befindlichen Transfersysteme mit geringen Anpaßarbeiten anzugliedern. Der Einsatz von Identifikationssystemen ermöglicht die Produktionsumstellung der Zelle ohne Eingriffe von außen.

Die Darstellung der Zellenstruktur in Fig. 2 läßt auch erkennen, daß durch die beschriebenen Systemkomponenten die Vernetzung mehrerer Fertigungs- und/oder Montagezellen untereinander wesentlich vereinfacht wird.

**Ansprüche**

1. Flexible Fertigungs- und/oder Montagezelle für die Herstellung und/oder Montage unterschiedlicher Produkte mit automatischer Umrüstung auf unterschiedliche Produkte und produktspezifische Vorrichtungen, **dadurch gekennzeichnet,** daß an die Fertigungs- und/oder Montagezelle verfahrbare Speichereinrichtungen (1) ankoppelbar sind, in denen die jeweils zu produzierenden Produkte bzw. deren Teile (Werkstücke) und/oder die jeweils für die Herstellung und/oder Montage benötigten Vorrichtungen bereitstellbar sind.

2. Fertigungs- und/oder Montagezelle nach Anspruch 1, dadurch gekennzeichnet, daß ihr fest angeordnete Speichereinrichtungen (2) zugeordnet sind, die von außerhalb der Zelle beschickbar sind.

3. Fertigungs- und/oder Montagezelle nach Anspruch 1 oder 2, gekennzeichnet durch eine modular aufgebaute Handhabungsvorrichtung (3), der sternförmig Fertigungs-und/oder Montage-Arbeitsplätze oder -zellen zugeordnet sind.

4. Fertigungs- und/oder Montagezelle nach Anspruch 3, dadurch gekennzeichnet, daß die Handhabungsvorrichtung (3) Werkstück- und Baugruppenträgerplatten (6) aufnimmt, räumlich verfährt, ablegt und Werkstücke, Werkzeuge und Vorrichtungen Transportsystemen (5) zuführt oder auf Positioniertischen (12) positioniert.

5. Fertigungs- und/oder Montagezelle nach Anspruch 4, dadurch gekennzeichnet, daß die Werkstück- und Bauträgerplatten (6) in zur Handhabungsvorrichtung (3) radial angeordneten, verfahrbaren (1) oder fest (stationär) angeordneten Speichereinrichtungen (2) zwischengespeichert und der Handhabungsvorrichtung (3) zur Versorgung zuführbar und zur Entsorgung von ihr entfernbar und damit auslagerbar sind.

6. Fertigungs- und/oder Montagezelle nach einem der Ansprüche 1 bis 5, dadurch gekennzeichnet, daß die Speichereinrichtungen (1, 2) unter einem beliebigen Winkel an die Handhabungsvorrichtung (3) ankoppelbar und unter Berücksichtigung der Vermeidung von Kollisionen miteinander einander zugeordnet sind.

7. Fertigungs- und/oder Montagezelle nach einem der Ansprüche 1 bis 6, dadurch gekennzeichnet, daß der Handhabungsvorrichtung (3) mehrere Speichereinrichtungen (1, 2) im Arbeitsbereich parallel bereitgehalten sind.

8. Fertigungs- und Montagezelle nach einem der Ansprüche 1 bis 7, dadurch gekennzeichnet, daß während der Herstellung und/oder Montage eines Produkts die Speichereinrichtungen (1, 2) für ein anderes Produkt für eine Produktionsumstellung austauschbar sind.

9. Fertigungs- und/oder Montagezelle nach einem der Ansprüche 1 bis 8, gekennzeichnet durch einen Fertigungs- und/oder Montageroboter (8).

10. Fertigungs- und/oder Montagezelle nach Anspruch 9, dadurch gekennzeichnet, daß, der Arbeitsbereich des Fertigungs- und/oder Montageroboters (8) in gleichmäßige Rasterflächen (7) aufgeteilt ist.

11. Fertigungs- und/oder Montagezelle nach Anspruch 9 oder 10, dadurch gekennzeichnet, daß ein rotationssymmetrischer Arbeitsbereich des Fertigungs- und/oder Montageroboters (8) in ein Raster aufgeteilt ist, wobei den Rasterflächen (7) Werkstück- und Baugruppenträgerplatten (6) zugeordnet sind.

12. Fertigungs- und/oder Montagezelle nach einem der Ansprüche 1 bis 11, dadurch gekennzeichnet, daß der Arbeitsbereich des Fertigungs- und/oder Montageroboters (8) in ein gleichmäßiges Raster aufgeteilt ist.

13. Fertigungs- und/oder Montagezelle nach einem der Ansprüche 9 bis 12, gekennzeichnet durch zugeordnete Werkstück- und Baugruppenträgerplatten (6), die ein ganzes Vielfaches des Grundrasters des Arbeitsbereichs des Fertigungs- und/oder Montageroboters (8) bilden.

14. Fertigungs- und/oder Montagezelle nach einem der Ansprüche 3 bis 13, dadurch gekennzeichnet, daß der Handhabungsvorrichtung (3) gleichzeitig verschiedene Werkstück- und/oder Werkzeugsortimente zuführbar sind.

15. Fertigungs- und/oder Montagezelle nach Anspruch 14, dadurch gekennzeichnet, daß die Zuführung der verschiedenen Werkstück- und/oder Werkzeugsortimente mittels linearer und/oder rotatorischer Transfersysteme erfolgt.

16. Fertigungs- und/oder Montagezelle nach einem der Ansprüche 1 bis 8, dadurch gekennzeichnet, daß mehr als ein Fertigungs- und/oder Montageroboter (8) vorgesehen ist bzw. sind.

17. Fertigungs- und/oder Montagezelle nach einem der Ansprüche 9 bis 16, dadurch gekennzeichnet, daß einem oder mehreren Arbeitsbereich(en) von Fertigungs- und/oder Montagerobotern (8) Werkstück- und Baugruppenträgerplatten (6) auf mehreren Transportsystemen (5) zuführbar sind.

18. Fertigungs- und/oder Montagezelle nach Anspruch 17, dadurch gekennzeichnet, daß die Werkstück- und Baugruppenträgerplatten (6) im bzw. in den Arbeitsbereich(en) des bzw. der Fertigungs- und/oder Montageroboter(s) (8) positionierbar und/oder anhebbar sind.

19. Fertigungs- und/oder Montagezelle nach einem der Ansprüche 4 bis 18, dadurch gekennzeichnet, daß die Werkstück- und Baugruppenträgerplatten (6) maschinell (automatisch) oder manuell von außen in den Arbeitsbereich eines Fertigungs- und/oder Montageroboters (8) einbringbar und dort positonierbar sind.

20. Fertigungs- und/oder Montagezelle nach einem der Ansprüche 1 bis 19, gekennzeichnet durch ein oder mehr Transportsystem(e) (5, 13) für Werkstück- und Baugruppenträgerplatten (6).

21. Fertigungs- und/oder Montagezelle nach einem der Ansprüche 1 bis 19, gekennzeichnet durch einen oder mehr stationär angeordnete(n) Tisch(e) (5´, 12) zur Aufnahme von Werkstück- und Baugruppenträgerplatten (6).

22. Fertigungs- und/oder Montagezelle nach Anspruch 20, dadurch gekennzeichnet, daß das oder die Transportsystem(e) (5, 13) ein lineares oder rotatorisches Transfersystem ist bzw. lineare oder rotatorische Transfersysteme sind.

23. Fertigungs- und/oder Montagezelle nach Anspruch 21, dadurch gekennzeichnet, daß der oder die stationär angeordnete(n) Tisch(e) ein Schiebetisch (5´), Rundschalttische (12 in Fig. 1) oder Paternostertische sind.

24. Fertigungs- und/oder Montagezelle nach einem der Ansprüche 20 bis 23, dadurch gekennzeichnet, daß das oder die Transportsystem(e) (5, 13) oder der oder die stationär angeordnete(n) Tisch(e) (5´, 12) die Werkstück- und Baugruppenträgerplatten (6) direkt dem Fertigungs- und/oder Montageroboter (8) übergeben.

25. Fertigungs- und/oder Montagezelle nach einem der Ansprüche 4 bis 24, dadurch gekennzeichnet, daß die Werkstück- und Baugruppenträgerplatten (6) auf Einrichtplätzen außerhalb der Fertigungs- und/oder Montagezelle montiert und vermessen sind.

26. Fertigungs- und/oder Montagezelle nach einem der Ansprüche 4 bis 25, dadurch gekennzeichnet, daß die Werkstück- und Baugruppenträgerplatten (6) mit Steckverbindern für die Energiezufuhr und/oder den Datenaustausch und/oder Betriebsstoffe wie Dichtungsmasse, Kleber, Schrauben usw. versehen sind.

27. Fertigungs- und/oder Montagezelle nach Anspruch 26, dadurch gekennzeichnet, daß die Steckverbindung während des Vorgangs der maschinellen (automatischen) oder der manuellen Positionierung der Werkstück- und Baugruppenträgerplatten (6) hergestellt ist.

28. Fertigungs- und/oder Montagezelle nach einem der Ansprüche 4 bis 27, dadurch gekennzeichnet, daß die im Arbeitsbereich des Fertigungs- und/oder Montageroboters (8) positionierten Werkstück- und Baugruppenträgerplatten (6) mittels eines Visionsystems vermessen und in ihrer Lage im Koordinatensystem des Arbeitsbereichs bestimmt sind.

29. Fertigungs- und/oder Montagezelle nach einem der Ansprüche 1 bis 28, dadurch gekennzeichnet, daß die Werkstücke und/oder Werkzeuge mittels eines Identifikationssystems die selbständige Umrüstung der Fertigungs- und/oder Montagezelle auslösen.

30. Fertigungs- und/oder Montagezelle nach einem der Ansprüche 1 bis 28, dadurch gekennzeichnet, daß die Werkstücke und/oder Werkzeuge mittels gesonderter Steuerungen über Schnittstellen oder das Bedienungspersonal die selbständige Umrüstung der Fertigungs-und/oder Montagezelle auslösen.

31. Fertigungs- und/oder Montagezelle nach einem der Ansprüche 1 bis 28, dadurch, gekennzeichnet, daß die Umrüstung durch einen außerhalb der Fertigungs-und/oder Montagezelle angeordneten Leitrechner auslösbar ist.

32. Fertigungs- und/oder Montagezelle nach einem der Ansprüche 1 bis 31, dadurch gekennzeichnet, daß sie mit einer oder mehr anderen Fertigungs- und/oder Montagezelle(n) über Transfersysteme oder ein oder mehr Paletten-Handhabungssystem(e) vernetzbar ist.

33. Fertigungs- und/oder Montagezelle nach einem der Ansprüche 1 bis 32, dadurch gekennzeichnet, daß die Speichereinrichtungen (1, 2) mittels fahrerloser Transportsysteme (FTS)-,Magazinschleusen oder dergleichen Vorrichtungen automatisch zuführbar sind.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| X | <u>EP - A1 - 0 210 572</u><br>(KUMETH)<br>   \* Claims 1,3,9; column 2,<br>    lines 30-49; fig. 1,2 \* | 1 | B 23 P 21/00 |
| A | | 7-9,<br>14-16,<br>19-21,<br>26,27,<br>29-33 | |
| A | <u>US - A - 4 787 141</u><br>(MIYAZUKI et al.)<br>   \* Column 3, lines 50-57;<br>    fig. 1 \* | 1,4,5,<br>9,18 | |
| A | <u>DE - A1 - 3 413 255</u><br>(KRONE)<br>   \* Claims 1,2; fig. 1 \* | 1,9,<br>18,19,<br>25,32 | |
| A | <u>EP - A1 - 0 140 837</u><br>(KAISER)<br>   \* Claims 6,11,15 \* | 9,19,<br>20,22,<br>23,24 | RECHERCHIERTE SACHGEBIETE (Int. Cl.⁵) |
| A | <u>US - A - 4 598 459</u><br>(KLINK et al.)<br>   \* Claims 1,3 \* | 9,28 | B 23 P 19/00<br>B 29 P 21/00<br>B 23 P 23/00<br>B 23 Q 7/00 |
| A | <u>DD - A - 208 317</u><br>(MUELLER, FROMMHOLD)<br>   \* Ausführungsbeispiel, Zeilen<br>    18-22 \* | 9,11 | B 23 Q 39/00 |

Der vorliegende Recherchenbericht wurde für alle Patentansprüche erstellt

| Recherchenort | Abschlußdatum der Recherche | Prüfer |
|---|---|---|
| WIEN | 01-03-1990 | BISTRICH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82